# EUROPÄISCHE PATENTSCHRIFT

(11) **EP 3 293 241 B1**
(45) Veröffentlichungstag und Bekanntmachung des Hinweises auf die Patenterteilung: **26.06.2019**
(21) Anmeldenummer: 17197252.4
(22) Anmeldetag: 07.11.2008
(51) Int. Cl.: C09K 3/10, C08L 23/08, B65D 53/00

(54) **PRESS-ON TWIST-OFF-VERSCHLUSS**
PRESS-ON TWIST-OFF-CLOSURE
FERMETURE PRESS-ON TWIST-OFF

(30) Priorität: 09.11.2007 EP 07021782; 08.02.2008 EP 08002379
(43) Veröffentlichungstag der Anmeldung: 14.03.2018
(62) Teilanmeldung aus: 08848153.6
(73) Patentinhaber: Actega DS GmbH, 28219 Bremen (DE)
(72) Erfinder: POEL, Christiane, 28203 Bremen (DE); WITTENBERG, Rüdiger, 28865 Lilienthal (DE); SCHLENK, Georg, 27793 Wildeshausen (DE)
(74) Vertreter: Maiwald, Walter

(56) Entgegenhaltungen:
- US-A1- 2006 199 911
- US-B1- 6 235 822

## Beschreibung

Die Erfindung betrifft einen Press-on twist-off®-Verschluss für Gefäße mit einer durch den Gefäßverschluss zu verschließenden Öffnung mit einem Innendurchmesser von mindestens 3,5 cm, ein PVC-freies Dichtungselement auf Polymerbasis umfasst, welches im Gefäßverschluss so angeordnet ist, dass es im Schließzustand dichtend an der Öffnung des Gefäßes anliegt, bei dem ein Polymercompound durch Erwärmung ausreichend fliessfähig gemacht und im Bereich des zu erzeugenden Dichtungselements auf den Gefäßverschluss aufgetragen sowie mechanisch in die gewünschte Form gebracht wird, die es nach Erkalten beibehält.

Press-on twist-off®-Verschlüsse werden auch als PT-Kappen bezeichnet.

Während die Industrie für die Dichtungseinlagen von Kronkorken oder Flaschenschraubverschlüssen seit längerem PVC-freie Compounds verwendet, werden für Schraubdeckel, Nockendrehverschlüsse, PT-Kappen und dergleichen, die als Gefäßverschlüsse für Gefäße mit einem größeren Innendurchmesser der Öffnung dienen, nach wie vor PVC-haltige Compounds eingesetzt. Üblicherweise werden solche PVC-haltigen Compounds bei Raumtemperatur in flüssiger Form, aus weichmacherhaltigen Systemen aufgetragen.

Es ist jedoch unerwünscht, PVC-haltige Compounds einzusetzen. Bei der üblichen Verbrennung von Haushaltsabfall entstehen aus Halogenkunststoffen säurehaltige Gase, deren Entweichen in die Atmosphäre schädlich ist. Außerdem erfordern solche PVC-basierenden Dichtungselemente den Einsatz von Weichmachern, die aus gesundheitlichen Gründen ebenfalls bedenklich sein können.

Es besteht daher ein Bedarf für PT-Kappen, die ein Dichtungselement auf Polymerbasis aufweisen, welches aber nicht auf PVC basiert, und die sich für Gefäße mit relativ großen Öffnungen, mit mindestens 3,5 cm Innendurchmesser, eignen.

Es ist eine wesentliche Aufgabe der Erfindung solche PT-Kappen anzugeben, die mit einem Dichtungselement auf Polymerbasis versehen sind, welches kein PVC enthält.

Die Erfindung löst diese Aufgabe mittels der in Anspruch 1 definierten Merkmalskombination.

Polymercompounds für kleine Gefäßverschlüsse sind in EP 0 503 124 beschrieben. Jedoch sind die Anforderungen an die Dichtungs-Materialien bei Gefäßverschlüssen für größere Innendurchmesser der Gefäßöffnung gegebenenfalls anspruchsvoller. Für solche Einsatzzwecke kommt es besonders darauf an, eine ausreichende Fließfähigkeit des Polymermaterials bei der Herstellung des Dichtungselementes zu verbinden mit ausreichenden Dichtungseigenschaften im verschlossenen Zustand; hierzu gehört auch die heute erforderliche Dichtigkeit gegenüber dem Eindringen bzw. dem Entweichen von Gasen, gegebenenfalls kombiniert mit einer Überdruckventilwirkung, die das Platzen des Gefäßes beim Erwärmen oder bei der Entwicklung von Überdruck im Gefäß aus anderen Gründen verhindert. Zudem wird aber gerade für die typischen Einsatzzwecke von Gefäßen mit größeren Öffnungsdurchmessern (beispielsweise Konserven) verlangt, dass das Dichtungselement auch unter Sterilisierungsbedingungen einsetzbar ist.

Die in EP 0 503 124 beschriebenen Gefäßverschlüsse, die typischerweise für die Abfüllung von Bier, Softdrinks, Saft und dergleichen in übliche enghalsige Getränkeflaschen gedacht sind, müssen zwar den dort genannten Behandlungen wie Pasteurisierung und Heißfüllung standhalten können, jedoch sind das thermisch weitaus weniger anspruchsvolle Verfahren als die Sterilisierung. Bei Pasteurisierung und Heißfüllung werden Temperaturen unterhalb 100 °C eingesetzt; typische Sterilisierungsbedingungen sind 121 °C oder sogar 132 °C. Die erfindungsgemäß zu verwendenden Polymermaterialien sind in der Art maßgeschneidert, dass sie einerseits während des Pasteurisations- und Heißfüllprozess und andererseits im Sterilisationsprozess ihre Dichtungswirkung im nötigen Umfang beibehalten.

Außerdem lassen sich nicht alle Compounds der in EP 0 503 124 beschriebenen Art ohne weiteres für größere Verschlüsse einsetzen. Obwohl in EP 0 503 124 angegeben ist, dass sich die dort beschriebenen Compounds auch für Schraubdeckel und dergleichen eignen, ist dies oft nur der Fall, wenn die Verarbeitungseigenschaften entsprechend abgewandelt werden - insbesondere durch den Zusatz von Strecköl, um die Fließfähigkeit zu verbessern. Das ist nicht immer erwünscht, z.B. im Hinblick auf die Gefahr der Migration von Compound-Bestandteilen in fetthaltige Nahrungsmittel.

Aus US 2006/1991 ist bekannt, Block-Copolymere von Ethylen und Octen für Dichtungen, einschliesslich solchen für Gefäßverschlüsse, einzusetzen. Dabei kann PVC mitverwendet werden. Sehr hohe Ölgehalte sind möglich. Dichtungselemente von Gefäßverschlüssen sind dabei stets geschäumt.

Aus US 6,235,822 sind Gefäßverschlüsse mit einem Dichtungselement bekannt, das kein PVC enthält und einen Gehalt an Ethylen/Octen-Copolymer sowie EthylenAcrylsäure-Copolymer aufweist. PT-Kappen werden nicht beschrieben. Die Shore-A-Härte des Compounds wird nicht angegeben.

PVC-freie Materialien, die keine Weichmacher aufweisen, müssen in thermisch ausreichend erweichter Form aufgetragen werden. Durch Rotation des Rohlings und Einspritzen des Materials, wie bei PVC-Plastisolen, lässt sich eine solche Dichtung nicht erzeugen. Dies erfordert vielmehr beispielsweise Extrusion und entsprechende Formgebung.

Grundsätzlich wird gemäß dem erfindungsgemäßen Herstellungsverfahren von einem Gefäßverschluss-Rohling aus Metall oder Kunststoff ausgegangen, der vorzugsweise zunächst auf seiner Innenseite mit einem geeigneten Primer vorbehandelt wird.

Insbesondere eignet sich hierfür ein TPE-Lack, etwa der von der Firma Rhenania entwickelte Primer-Lack, auf dem die erfindungsgemäß am meisten bevorzugten Compounds besonders gut haften.

Alternativ dazu kann man eine geeignete Primerbeschichtung durch Laminierung, Kaschierung oder eventuell auch durch Co-Extrusion aufbringen.

Auf den so vorbehandelten Rohling wird innenseitig das Polymermaterial, das die Dichtung bilden soll, in thermisch fließfähig gemachter Form aufgetragen. Insbesondere eignet sich hierfür eine Extrusion, bei welcher das Dichtungscompound im Temperaturbereich zwischen 100 °C und 260 °C vorgelegt wird.

Die Extrusion kann etwa in die Mitte der Rohling-Innenfläche erfolgen, wenn die Dichtungseinlage kreisscheibenförmig ausgebildet sein soll.

Nachfolgend wird das kreisscheibenförmige Dichtungselement aus dem extrudierten, noch fließfähigen Material durch entsprechende Stempelung (analog dem bekannten SACMI-Verfahren) geformt.

In abgewandelter Form kann das Dichtungselement außerhalb des Verschlusses oder Verschlussrohlings durch Verstempelung eines geeigneten Polymermaterials geformt und anschließend in den Verschluss oder Rohling eingebracht werden. Dieses Verfahren ist ebenfalls durch SACMI für kleine Verschlüsse als outshell-moulding bekannt.

Das erfindungsgemäße Verfahren hat, wie ersichtlich, gegenüber dem bekannten Plastisol-Verfahren den weiteren Vorteil, dass die Dichtungseinlage durch die Formgebung (stempeln) bereits völlig fertig gestellt ist und nicht, wie beim Einspritzen von Plastisol, eine anschließende Aushärtung im Ofen erforderlich ist.

Wenn das entsprechend ausgeformte Dichtungselement kreisscheibenförmig ist, wird man vorzugsweise im Mittelbereich des Verschlusses, der keine Dichtungswirkung hat, weil er innerhalb der Gefäßmündung liegt, eine Dicke von etwa 0,1 - 0,2 mm für das Dichtungselement vorsehen.

Wenn der Gefäßverschluss völlig eben ist, wird das Dichtungselement daher auch in seinem Dichtungsbereich eine entsprechende Dicke haben.

Hat der Gefäßverschluss hingegen in dem Bereich, der der Mündung des zu verschließenden Gefäßes entspricht, eine Vertiefung ("Kanal"), so wie dies bei Verschlüssen mit PVC-basierenden Plastisol-Dichtungen regelmäßig der Fall ist, dann wird das Dichtungselement in diesem Bereich eventuell dicker sein. Wegen der größeren Elastizität eines dickeren Dichtungselementes kann das von Vorteil sein. In solchen Fällen ist das Dichtungselement in seinem dichtenden Bereich oft vorzugsweise etwa 1 mm dick.

Man kann im Bereich des Dichtungselementes, der dichtend mit der Gefäßmündung in Kontakt kommt, auch eine aufwändigere Formgebung vorsehen und insbesondere eine oder mehrere Dichtungslippen ausformen. Das kann durch entsprechende Formgebung beim Verstempeln des Extrudats geschehen. Im Bereich solcher Dichtungslippen kann das Dichtungselement dann eine entsprechend größere Dicke aufweisen und beispielsweise bis zu 3 mm dick sein.

Für den jeweiligen konkreten Verwendungszweck kann das Compound hinsichtlich Shore-Härte, Elastizitätsmodul, rheologischen Eigenschaften und dergleichen durch im Stand der Technik bekannte Maßnahmen eingestellt werden.

Es ist möglich, die erfindungsgemäßen Dichtungseinlagen mit im Prinzip bekannten Maßnahmen auszustatten, die eine Barrierewirkung gegenüber Sauerstoff und Geschmackschädlingen wie Trichloranisol bewirken. Ebenso lassen sich die erfindungsgemäßen Dichtungselemente, wiederum analog bekannter Maßnahmen, mit den gewünschten Druckhaltungs- bzw. Überdruckventileigenschaften versehen.

Vorteilhaft werden die erfindungsgemäßen Gefäßverschlüsse so ausgestattet, dass sie eine Vakuumsretention der Art zeigen, wie sie gegenwärtig von bekannten Verschlüssen bereitgestellt wird.

Die erwünschte Vakuumsretention ist grundsätzlich das Ausmaß, in dem ein anfänglich vorgegebenes Vakuum im nicht befüllten Teil des verschlossenen Gefäßes auch nach der Pasteurisation bzw. Sterilisation und der Dauer der nachfolgenden Mindest-Lagerungsfähigkeit des Produktes noch besteht. Zum Beispiel kann verlangt sein, dass in einem verschlossenen Glasbehälter, der ein Lebensmittel enthält, ein anfänglicher Innendruck von weniger als 0.2 bar besteht, und bis zum Ende der Mindest-Lagerungsfähigkeit (Mindest-Haltbarkeitsdauer) der Innendruck nicht größer als 0.2 bar wird.

Typischerweise misst man die Vakuumsretention, in dem nach dem Pasteurisieren oder Sterilisieren bei einer Stichprobe von Gefäßen der Deckel durchstochen und so der Innenraum mit einem Manometer verbunden wird. Der Innendruck wird abgelesen und aufgezeichnet. Bei einer anderen Stichprobe kann jetzt z.B. der Verlauf der Mindest-Haltbarkeitsdauer durch Behandlung mit Dampf bei erhöhter Temperatur simuliert werden ("accelerated ageing"). Danach wird der resultierende Innendruck, wie bei der ersten Stichprobe, gemessen. An dem Vergleich der Ergebnisse lässt sich erkennen, ob das Produkt den Anforderungen entspricht. Wenn bei einer zu großen Anzahl von Gefäßen der Stichproben der zulässige Innendruck überschritten wird, ist dies nicht der Fall.

Speziell betrifft die vorliegende Erfindung Press-on twist-off®-Gefäßverschlüsse aus Metall oder Kunststoff für Gefäße zur Aufnahme von Getränken oder Nahrungsmitteln mit einer Dichtungseinlage, deren Material so gewählt ist, dass die gesundheitlich bedenkliche Migration von Materialbestandteilen in das Getränk oder Nahrungsmittel verhindert wird.

Besonderes relevant sind diese Anforderungen bei Babynahrung, die typischerweise in Gläsern mit Press-on twist-off®-Verschlüssen verkauft wird.

Die Migration von Bestandteilen der Verpackung (zu der gegebenenfalls auch die Dichtungseinlage des Gefäßverschlusses gehört) in das Nahrungsmittel ist nicht nur generell unerwünscht, sondern auch durch gesetzliche Bestimmungen scharf reglementiert. Beispiele solcher Bestimmungen sind die EC-Direktiven 1935/2004, 2023/2006, 2002/72/EG und 372/2007.

Die Messung des Ausmaßes der gegebenenfalls beobachteten Migration erfolgt mittels Verfahren, wie sie insbesondere in der DIN EN 1186 definiert sind. Solche Verfahren finden auch im Kontext der vorliegenden Erfindung Anwendung.

Es ist kein triviales Problem, Gefäßverschlüsse der hier betrachteten Art mit PVCfreien Dichtungseinlagen zu versehen, wenn diese Verschlüsse den genannten Bestimmungen hinsichtlich der eventuellen Migration ihrer chemischen Bestandteile entsprechen müssen.

Für kleine Gefäßverschlüsse sind bereits Dichtungseinlagen mit Barrierewirkung gegenüber bestimmten Kontaminanten verwendet worden, wie sie z.B. in EP 0 503 124 beschrieben sind.

Jedoch sind die Anforderungen an die Dichtungs-Materialien bei Gefäßverschlüssen für größere Innendurchmesser der Gefäßöffnung gegebenenfalls anspruchsvoller. Für solche Einsatzzwecke kommt es besonders darauf an, eine ausreichende Fließfähigkeit des Polymermaterials bei der Herstellung des Dichtungselementes zu verbinden mit ausreichenden Dichtungseigenschaften im verschlossenen Zustand; hierzu gehört auch die heute erforderliche Dichtigkeit gegenüber dem Eindringen bzw. dem Entweichen von Gasen, gegebenenfalls kombiniert mit einer Überdruckventilwirkung, die das Platzen des Gefäßes beim Erwärmen oder bei der Entwicklung von Überdruck im Gefäß aus anderen Gründen verhindert. Zudem wird aber gerade für die typischen Einsatzzwecke von Gefäßen mit größeren Öffnungsdurchmessern (beispielsweise Konserven) verlangt, dass das Dichtungselement auch unter Sterilisierungsbedingungen einsetzbar ist.

Die in EP 0 503 124 beschriebenen Gefäßverschlüsse, die typischerweise für die Abfüllung von Bier, Softdrinks, Saft und dergleichen in übliche enghalsige Getränkeflaschen gedacht sind, müssen zwar den dort genannten Behandlungen wie Pasteurisierung und Heißfüllung standhalten können, jedoch sind das thermisch weitaus weniger anspruchsvolle Verfahren als die Sterilisierung. Bei Pasteurisierung und Heißfüllung werden Temperaturen unterhalb 100 °C eingesetzt; typische Sterilisierungsbedingungen sind 121 °C oder sogar 132 °C. Die erfindungsgemäß zu verwendenden Polymermaterialien sind so maßgeschneidert, dass sie einerseits für die Pateurisierung oder Heissfüllung geeignet sind und andererseits unter den höheren Temperaturen der Sterilisierung ihre Dichtungswirkung im nötigen Umfang beibehalten.

Außerdem müssen die Dichtungen den oben genannten Anforderungen hinsichtlich der eventuellen Migration chemischer Bestandteile entsprechen.

Die vorbekannten Compounds lassen sich oft nicht zu größeren Dichtungseinlagen verarbeiten, weil ihre Fließeigenschaften dies verhindern.

Um die Verarbeitung herkömmlicher Compounds zu erleichtern, werden diesen üblicherweise Streckmittel und/oder Weichmacher zugesetzt. Insbesondere werden dafür bei Anwendungstemperatur flüssige Komponenten wie Strecköle (vorzugsweise Weißöl) verwendet.

Es hat sich nun überraschend gezeigt, dass sich solche Compounds zwar, gegebenenfalls nach Modifikation der Rezeptur, auch zu Dichtungseinlagen mit größeren Durchmessern verarbeiten lassen, dass die damit ausgestatteten Gefäßverschlüsse aber den gesetzlichen Bestimmungen hinsichtlich der Migration chemischer Bestandteile nicht immer genügen.

Es ist eine wesentliche Aufgabe der Erfindung, Press-on twist-off®-Gefäßverschlüsse mit einer geeigneten Dichtungseinlage anzugeben, welches es ermöglicht, den Gefäßverschluss mit einem Dichtungselement auf Polymerbasis zu versehen, welches kein PVC enthält und den gesetzlichen Vorschriften hinsichtlich der Migration von Verpackungskomponenten entspricht.

Die Erfindung löst diese Aufgabe mittels der in Anspruch 1 definierten Merkmalskombination.

Grundsätzlich werden erfindungsgemäß Gefäßverschlüsse auch für solche Gefäße bereitgestellt, deren durch den Gefäßverschluss zu verschließende Öffnung einen Innendurchmesser von mindestens 3,5 cm aufweist. Das entspricht einem Innendurchmesser, der größer ist als jener, den übliche Getränkeflaschen aufweisen, die mit Kronkorken, Schraubkappen und dergleichen in bekannter Weise verschlossen werden, wie beispielsweise in der EP-B1 0 503 124 beschrieben.

Spezifischer handelt es sich bei der Erfindung grundsätzlich um Press-on twist-off®-Verschlüsse, auch bekannt als PT-Kappen, aus Metall oder Kunststoff für Gefäße zur Aufnahme von Getränken oder Nahrungsmitteln, die vor der Migration von Verpackungsbestandteilen entsprechend den gesetzlichen Vorschriften geschützt werden müssen. Das sind beispielsweise ölhaltige oder fetthaltige Nahrungsmittel, wie beispielsweise Fertignahrung, insbesondere aber ölhaltige Saucen und Gewürzpasten, beispielsweise Currypaste. In den Öl- und Fettbestandteilen solcher Nahrungsmittel lösen sich Streckmittel wie Weißöl, aber auch Weichmacherbestandteile besonders leicht.

Um einen dichten Verschluss des Gefäßes zu gewährleisten, verfügen die erfindungsgemäßen Gefäßverschlüsse über eine Dichtungseinlage, die den weiter oben genannten Anforderungen hinsichtlich ihrer Verarbeitbarkeit einerseits, ihrer Dichtungseigenschaften andererseits entspricht und die auch die gesetzlichen Anforderungen hinsichtlich der Migration von Verpackungskomponenten erfüllt.

Um dies zu erreichen, ist das Material der Dichtungseinlage so gewählt, dass die Migration von Bestandteilen des Materials in das Getränk oder Nahrungsmittel verhindert wird.

Als Hauptbestandteil umfasst das Material der Dichtungseinlage eine polymere Komponente, wie in Anspruch 1 definiert, die seine wesentliche Struktur bildet. Die Eigenschaften dieser hauptsächlichen polymeren Komponente können durch die Beimischung weiterer Komponenten, beispielsweise weiterer Polymere, geeignet modifiziert werden.

Jedoch ist erfindungsgemäß vorgesehen, dass das Material der Dichtungseinlage nur sehr geringe Gehalte von Bestandteilen aufweist, die bei Anwendungstemperatur flüssig sind. Die Anwendungstemperatur ist üblicherweise gleich der Umgebungstemperatur, also im Bereich üblicher Umgebungstemperaturen im Freien bzw. in beheizten Räumen.

Erfindungsgemäß werden daher dem Material der Dichtungseinlage nur geringe oder vorzugsweise gar keine Gehalte an flüssigen Streckmitteln wie insbesondere Weißöl zugesetzt.

In bevorzugten Ausführungsformen enthält das Material nicht mehr als 10 %, vorzugsweise nicht mehr als 7 %, insbesondere nicht mehr als 4 % und besonders bevorzugt nicht mehr als 1 % solcher flüssigen Bestandteile.

Es ist gegenwärtig am meisten bevorzugt, dass das Material innerhalb der zum Anmeldungszeitpunkt gegebenen analytischen Bestimmungsgrenzen überhaupt keine bei Anwendungstemperatur flüssigen Bestandteile enthält.

Weiterhin wird es bevorzugt, dass das Material der Dichtungseinlage keine Weichmacher enthält.

Da sich Compounds für solche Dichtungseinlagen gegebenenfalls ohne Streckmittelzusatz nur schwer verarbeiten lassen, insbesondere wenn der Durchmesser des Gefäßverschlusses 2 cm überschreitet, wenn das Material etwa wie in EP 0 503 124 beschrieben, auf der Basis von styrolhaltigen Block-Copolymeren mit elastomeren Kettenabschnitten aufgebaut ist, werden gemäß der Erfindung vorzugsweise solche Materialien verwendet, die diese Polymere nicht enthalten.

Es ist daher bevorzugt, wenn das Material, aus dem die Dichtungseinlage geformt wird, weder die genannten flüssigen Streckmittel, noch Weichmacher, noch styrolhaltige Block-Copolymere mit elastomeren Kettenabschnitten enthält.

Stattdessen ist das Polymermaterial, das den Hauptbestandteil der Dichtungseinlage bildet, auf bestimmten Polyalkylenen aufbaut, die sich ohne Streckmittel und dergleichen auch zu Dichtungseinlagen für Gefäßverschlüsse mit Durchmessern von wenigstens 3,5 cm verarbeiten lassen.

Gemäss der Erfindung handelt es sich dabei um ein Copolymer, das einerseits Polyethyleneinheiten umfasst, und andererseits aus einem Alken-Monomeren aufgebaut worden ist, welches aus Propen, Buten, Hexen und (insbesondere) Okten ausgewählt worden ist.

Solche Copolymere lassen sich mittels Metallocen-Katalysatoren gezielt mit den gewünschten physikalischen Eigenschaften erzeugen.

Dabei hat das genannte Material eine Shore A Härte von 40-90 und insbesondere eine Härte von 60-75. Der Druckverformungsrest bestimmt nach ASTM ... (70°C, 22h, 25% Kompression) liegt vorzugsweise in einem Bereich von 30-70% und besonders bevorzugt zwischen 30 und 50%.

Geeignete Polymere sind in EP 0 714 426 beschrieben. Dort wird angegeben, dass sich diese Polymere als solche auch zu Dichtungseinlagen verarbeiten lassen, wobei keinerlei Zusätze erfolgen sollen (S. 2, Z. 26 - 28). Das Problem der Migration von Materialbestandteilen wird hier nicht angesprochen.

Eine beispielhafte Rezeptur umfasst:

| | |
|---|---|
| Ethylen-Okten-Copolymer mitden o.g. Eigenschaften: | 45% |
| EVA (14%VA): | 40% |
| Hochfliessfähiges PP: | 14% |
| Stabilisatoren (Irganox 1010, Irgafos 168): | 0,2% |
| Gleitmittel (Erucasäureamid): | 0,2% |
| Gleitmittel (Ölsäureamid): | 0,2% |
| Pigment: | 0,4% |

Im Zusammenhang mit den gesetzlichen Vorschriften müssen Migrationstests erfolgen, die an den erfindungsgemäßen Gefäßverschlüssen in der Art und Weise durchgeführt werden, wie in der DIN EN 1186 beschrieben sind. Auf eine Wiedergabe dieser Messverfahren im Kontext der vorliegenden Anmeldung wird daher verzichtet; diese Tests werden durch Bezugnahme auf die DIN EN 1186 in den Offenbarungsgehalt der vorliegenden Anmeldung einbezogen.

Durch die Verwendung des genannten Polymermaterials wird erfindungsgemäß erreicht, dass die solchermaßen hergestellte Dichtungseinlage nicht nur unproblematisch hergestellt werden kann und die Dichtungseigenschaften aufweist, die eingangs beschrieben worden sind. Darüber hinaus sind solche Gefäßverschlüsse auch nicht nur pasteurisierbar, sondern auch sterilisierbar, und sie erfüllen die genannten europarechtlichen Vorschriften hinsichtlich der Migration von Bestandteilen des Polymermaterials in das Getränk oder Nahrungsmittel, das im erfindungsgemäß verschlossenen Gefäß enthalten ist.

Insoweit bilden die Vorschriften der genannten europarechtlichen Direktiven, insbesondere im Zusammenhang mit den Testkriterien der DIN EN 1186, geeignete Auswahlkriterien für das Polymermaterial, das sich aus der Vielzahl grundsätzlich denkbarer Compounds durch Verzicht auf bei Anwendungstemperatur flüssige Bestandteile und nachfolgendes Testen auffinden lässt.

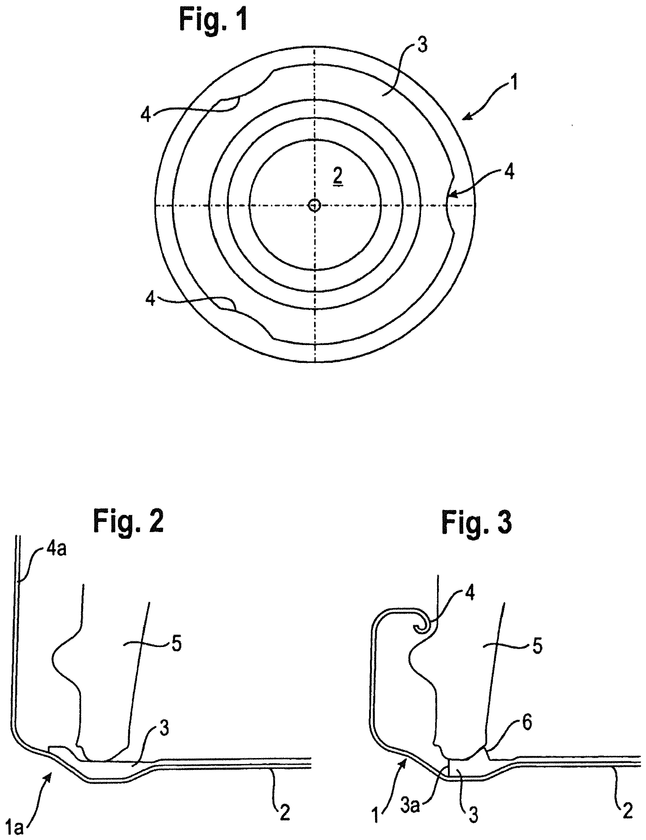

## Patentansprüche

1. Press-on twist-off®-Verschluss für Gefäße mit einer durch den Gefäßverschluss zu verschließenden Öffnung mit einem Innendurchmesser von mindestens 3,5 cm, der ein PVC-freies Dichtungselement auf Polymerbasis umfasst, welches im Gefäßverschluss so angeordnet ist, dass es im Schließzustand dichtend an der Öffnung des Gefäßes anliegt, bei dem ein Polymercompound durch Erwärmung ausreichend fließfähig gemacht und im Bereich des zu erzeugenden Dichtungselementes auf den Gefäßverschluss aufgetragen sowie mechanisch in die gewünschte Form gebracht wird, die es nach Erkalten beibehält,
**dadurch gekennzeichnet, dass** das Polymercompound nicht mehr als 10% von bei Anwendungstemperatur flüssigen Bestandteilen, insbesondere Weißöl, enthält;
dass die Shore A Härte des Polymercompounds zwischen 40 und 90 liegt; und das Polymercompound ein Copolymer enthält, das einerseits Polyethyleneinheiten umfasst und andererseits aus einem Alken-Monomeren aufgebaut ist, welches aus Propen, Buten, Hexen und insbesondere Octen ausgewählt ist.

2. Verschluss nach Anspruch 1, **dadurch gekennzeichnet, dass** das Polymercompound eine Shore A Härte von 60-75 hat.

3. Verschluss nach einem der Ansprüche 1 oder 2, **dadurch gekennzeichnet, dass** das Polymercompound nicht mehr als 7 %, insbesondere nicht mehr als 4 % und besonders bevorzugt nicht mehr als 1 % von bei Anwendungstemperatur flüssigen Bestandteilen, insbesondere Weißöl, enthält.

4. Verschluss nach Anspruch 3, bei dem das Copolymer mittels Metallocen-Katalysatoren erzeugt worden ist.

5. Verschluss nach einem der vorstehenden Ansprüche, **dadurch gekennzeichnet, dass** das Polymercompound so ausgebildet ist, dass das Dichtungselement unter Pasteurisationsbedingungen (bei bis zu 98 °C) einsetzbar ist.

6. Verschluss nach einem der vorstehenden Ansprüche, **dadurch gekennzeichnet, dass** das Polymercompound so ausgebildet ist, dass das Dichtungselement unter Sterilisierungsbedingungen (oberhalb 98 °C, spezieller ab 121 °C, vorzugsweise bei 132 °C) einsetzbar ist.

7. Verschluss nach einem der vorstehenden Ansprüche, **dadurch gekennzeichnet, dass** der Gefäßverschluss im Schließzustand eine Gas-Barrierewirkung und/oder eine Überdruckventilwirkung aufweist.

8. Verschluss nach einem der vorstehenden Ansprüche, **dadurch gekennzeichnet, dass** der Gefäßverschluss im Schließzustand eine Vakuumsretention zeigt.

9. Verschluss nach einem der vorstehenden Ansprüche, bei dem das Polymermaterial als Granulat bereitgestellt und mittels eines Extruders erwärmt wird.

10. Verschluss nach Anspruch 9, bei dem das fließfähige Polymermaterial aus einer Düse innenseitig auf den Gefäßverschluss aufgetragen wird.

11. Verschluss nach Anspruch 9 oder Anspruch 10, bei dem das aufgetragene Polymermaterial mittels eines Stempels oder dergleichen geformt wird.

12. Verschluss nach Anspruch 1, **dadurch gekennzeichnet, dass** der Gefäßverschluss einem Innendurchmesser der Gefäßöffnung von mindestens 4 cm entspricht.

13. Verschluss nach einem der vorstehenden Ansprüche, **dadurch gekennzeichnet, dass** das Polymercompound innenseitig auf einem Gefäßverschluss-Rohling aus Metall aufgetragen wird.

14. Verschluss nach einem der vorstehenden Ansprüche, **dadurch gekennzeichnet, dass** das Polymercompound beim Druckverformungstest bestimmt nach ASTM nach 22 Stunden Lagerung bei 70 °C und einer Kompression von 25 % einen Druckverformungsrest zwischen 30 % und 70 % aufweist.

## Claims

1. A Press-On Twist-Off® closure for containers having an opening that is to be closed by the container closure and has an inside diameter of at least 3.5 cm, comprising a PVC-free sealing element based on a polymer, said sealing element being arranged in the container closure in such a way that, when the container is closed, it forms a contacting seal at the opening of the container, a polymer compound in said closure being sufficiently liquidized by heating and applied to the container closure in the area of the sealing element to be created and is converted mechanically to the desired shape, which it will retain after cooling,
**characterized in that** the polymer compound contains no more than 10 % of liquid ingredients, in particular white oil, that are liquid at the use temperature;
the Shore A hardness of the polymer compound is between 40 and 90;
and the polymer compound contains a copolymer, which in turn is made up of polyethylene units, on the one hand, and, on the other hand, is formed from an alkene monomer that is selected from propene, butene, hexene and in particular octene.

2. The closure according to claim 1, **characterized in that** the polymer compound has a Shore A hardness of 60 - 75.

3. The closure according to any one of claims 1 or 2, **characterized in that** the polymer compound contains no more than 7 %, in particular no more than 4 % and especially preferably no more than 1 % of ingredients, in particular white oil, that are liquid at the use temperature.

4. The closure according to claim 3, in which the copolymer has been created by means of metallocene catalysts.

5. The closure according to any one of the preceding claims, **characterized in that** the polymer compound is formed so that the sealing element can be used under pasteurization conditions (at up to 98 °C).

6. The closure according to any one of the preceding claims, **characterized in that** the polymer compound is formed, so that the sealing element can be used under sterilization conditions (above 98 °C, more specifically above 121 °C, preferably at 132 °C).

7. The closure according to any one of the preceding claims, **characterized in that** the container closure has a gas barrier effect and/or an excess pressure valve effect when closed.

8. The closure according to any one of the preceding claims, **characterized in that** the container closure has a vacuum retention effect when closed.

9. The closure according to any one of the preceding claims, in which the polymer material is supplied as granules and is heated by means of an extruder.

10. The closure according to claim 9, in which the free-flowing polymer material is applied to the inside of the container closure from a nozzle.

11. The closure according to claim 9 or claim 10, in which the applied polymer material is shaped by means of a die or the like.

12. The closure according to claim 1, **characterized in that** the container closure corresponds to an inside diameter of the container opening of at least 4 cm.

13. The closure according to any one of the preceding claims, **characterized in that** the polymer compound is applied to the inside of a container blank made of metal.

14. The closure according to any one of the preceding claims, **characterized in that** the polymer compound has a compression set between 30 % and 70 % in the compression set test according to ASTM after 22 hours of storage at 70 °C and a compression of 25 %.

## Revendications

1. Fermeture Press-on twist-off®, destinée à des récipients pourvus d'un orifice qui doit être obturé par une fermeture de récipient, d'un diamètre intérieur d'au moins 3,5 cm, laquelle comprend un élément d'étanchéité exempt de PVC, sur base polymère, lequel est placé dans la fermeture de récipient de telle sorte que dans l'état d'obturation, il soit adjacent de manière à assurer l'étanchéité sur l'orifice du récipient, pour lequel, par échauffement, un composite polymère est rendu suffisamment fluide et dans une zone de l'élément d'étanchéité qui doit être créé, est appliqué sur la fermeture de récipient, ainsi qu'amené de manière mécanique dans le forme souhaitée, qu'il conserve après le refroidissement,
**caractérisée en ce que** le composite polymère ne contient pas plus de 10% de composants liquides à la température d'utilisation, notamment d'huile blanche ;
**en ce que** la dureté shore A du composite polymère se situe entre 40 et 90 ;
et **en ce que** le composite polymère contient un copolymère qui comprend d'une part des unités de polyéthylène et qui est construit d'autre part en un monomère d'alcènes, lequel est choisi parmi le propène, le butène, l'hexène et notamment l'octène.

2. Fermeture selon la revendication 1, **caractérisée en ce que** le composite polymère fait preuve d'une dureté shore A de 60 à 75.

3. Fermeture selon l'une quelconque des revendications 1 ou 2, **caractérisée en ce que** le composite polymère ne contient pas plus de 7 %, notamment pas plus de 4 % et de manière particulièrement préférentielle, pas plus de 1 % de composants liquides à la température d'utilisation, notamment d'huile blanche.

4. Fermeture selon la revendication 3, pour laquelle le copolymère a été créé à l'aide de catalyseurs métallocènes.

5. Fermeture selon l'une quelconque des revendications précédentes, **caractérisée en ce que** le composite polymère est conçu de telle sorte que l'élément d'étanchéité soit utilisable dans des conditions de pasteurisation (à jusqu'à 98 °C).

6. Fermeture selon l'une quelconque des revendications précédentes, **caractérisée en ce que** le composite polymère est conçu de telle sorte que l'élément d'étanchéité soit utilisable dans des conditions de stérilisation (au-delà de 98 °C, plus spécialement à partir de 121 °C, de préférence à 132 °C).

7. Fermeture selon l'une quelconque des revendications précédentes, **caractérisée en ce que** dans l'état d'obturation, la fermeture de récipient fait preuve d'un effet barrière au gaz et/ou d'un effet de soupape de surpression.

8. Fermeture selon l'une quelconque des revendications précédentes, **caractérisée en ce que** dans l'état d'obturation, la fermeture de récipient fait preuve d'une rétention de vide.

9. Fermeture selon l'une quelconque des revendications précédentes, pour laquelle la matière polymère est mise à disposition sous la forme de granulés et échauffée à l'aide d'une extrudeuse.

10. Fermeture selon la revendication 9, pour laquelle la matière polymère fluide est appliquée à partir d'une tuyère sur la face interne de la fermeture de récipient.

11. Fermeture selon la revendication 9 ou la revendication 10, pour laquelle la matière polymère appliquée est façonnée à l'aide d'un poinçon ou similaire.

12. Fermeture selon la revendication 1, **caractérisée en ce que** la fermeture de récipient correspond à un diamètre intérieur de l'orifice de récipient d'au moins 4 cm.

13. Fermeture selon l'une quelconque des revendications précédentes, **caractérisée en ce que** le composite polymère est appliqué sur la face interne d'une ébauche de fermeture de récipient métallique.

14. Fermeture selon l'une quelconque des revendications précédentes, **caractérisée en ce que** lors d'un essai de déformation à la pression déterminé selon ASTM, après 22 heures de stockage à 70 °C sous une compression de 25 %, le composite polymère fait preuve d'une déformation rémanente comprise entre 30 % et 70 %.
